(19) Europäisches Patentamt
European Patent Office
Office européen des brevets

(11) Veröffentlichungsnummer: **0 052 831**
**B1**

(12) # EUROPÄISCHE PATENTSCHRIFT

(45) Veröffentlichungstag der Patentschrift: **14.12.83**

(51) Int. Cl.³: **C 09 D 5/40**, C 25 D 13/06

(21) Anmeldenummer: **81109613.0**

(22) Anmeldetag: **11.11.81**

(54) **Verfahren zum Beschichten eines elektrisch leitfähigen Substrates.**

(30) Priorität: **26.11.80 DE 3044447**

(43) Veröffentlichungstag der Anmeldung: **02.06.82 Patentblatt 82/22**

(45) Bekanntmachung des Hinweises auf die Patenterteilung: **14.12.83 Patentblatt 83/50**

(84) Benannte Vertragsstaaten: **AT BE CH DE FR GB IT LI NL SE**

(56) Entgegenhaltungen:
**DE - A - 2 919 130**
**DE - B - 2 248 836**
**US - A - 3 994 792**

(73) Patentinhaber: **BASF Farben + Fasern Aktiengesellschaft, Am Neumarkt 30, D-2000 Hamburg 70 (DE)**

(72) Erfinder: **Batzill, Wolfgang, Dr., Emil-Nolde-Weg 93, D-4400 Münster (DE)**
Erfinder: **Diefenbach, Horst, Dr., Lerchenhain 8, D-4405 Nottuln (DE)**

(74) Vertreter: **Habbel, Hans-Georg, Dipl.-Ing., Postfach 3429 Am Kanonengraben 11, D-4400 Münster (DE)**

**EP 0 052 831 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zum Beschichten eines elektrisch leitfähigen Substrates

Die Erfindung bezieht sich auf ein Verfahren zum Beschichten eines als Kathode geschalteten elektrisch leitfähigen Substrates mit einem kationischen Überzugsmittel aus einem Elektrotauchbad und anschliessendes Härten des Überzuges. Die Erfindung bezieht sich ferner auf das Überzugsmittel zur Durchführung des Beschichtungsverfahrens.

Aus der DE-A 2 248 836 ist ein Verfahren bekannt, aus einem Elektrotauchbad, das ein kationisches Harz zusammen mit einem pulverförmigen, nicht ionischen synthetische Harz enthält, Überzüge auf einer Kathode abzuscheiden. Einer der Nachteile der bekannten Elektrotauchbäder liegt darin, dass sie instabil sind und sich durch Absetzen der pulverförmigen Anteile trennen. Fallen beispielsweise Rühreinrichtungen aus, lassen sich diese Elektrotauchbäder häufig kaum noch wiederaufrühren.

Ein weiterer Nachteil der bekannten Überzugsmittel liegt darin, dass auf verschieden vorbehandelten Substraten ungleichförmige Überzüge erhalten werden. Ausserdem werden abgelegene Stellen weniger gut beschichtet. Auf Substraten mit waagerechten und senkrechten Flächen werden unterschiedliche Schichtdicken erhalten.

Aus diesem Grunde wird in der DE-A 2 919 130 vorgeschlagen, eine zweite Beschichtung anzuschliessen, die in einem Elektrotauchbad durchgeführt wird, das nur das kationische Harz enthält. Damit die zweite Beschichtung erfolgen kann, wird die erste Beschichtung nicht eingebrannt, sondern mit heissem Wasser mit einer Temperatur von mehr als 50°C behandelt. Dieses Verfahren ist aber recht umständlich und lässt sich in der Praxis kaum anwenden.

Aus der US-A 3 994 792 ist es bekannt, ein elektrisch nicht leitfähiges, nicht ionisches filmbildendes organisches Polymer aus einer wässrigen Dispersion, die als oberflächenaktives Mittel ein Sulfoxoniumkation enthält, abzuscheiden.

Es war die Aufgabe der Erfindung, unter Vermeidung der bekannten Nachteile bessere Elektrotauchbäder zur Verfügung zu stellen.

Diese Aufgabe wurde überraschenderweise gelöst durch ein Verfahren zum Beschichten eines als Kathode geschalteten elektrisch leitfähigen Substrates mit einem kationischen Überzugsmittel aus einem Elektrotauchbad und anschliessendes Härten des Überzuges, das dadurch gekennzeichnet ist, dass man als kationisches Überzugsmittel eine wässrige Dispersion aus

A. mit Säuren protonisierten, basische Gruppen enthaltenden kationischen Kunstharzen in gelöster oder dispergierter Form und

B. eindispergierten feinteiligen ionischen Kunststoffen mit einer Glastemperatur von 30°C bis 150°C verwendet.

Bevorzugt geeignet sind solche wässrigen Dispersionen, die Pigmente und/oder Füllstoffe und/oder solche wassermischbare organische Lösungsmittel enthalten, die die feinteiligen Kunststoffe weder anlösen noch anquellen.

Die feinteiligen ionischen Kunststoffe können in einer besonders bevorzugten Ausführungsform der Erfindung bereits Pigmente und/oder Füllstoffe enthalten.

Aus den erfindungsgemässen wässrigen Dispersionen lassen sich sowohl die feinteiligen ionischen Kunststoffe als auch die kationischen Kunstharze gleichmässig kathodisch abscheiden und ergeben nach kurzer Beschichtungszeit Überzüge bis zu 150 µm mit hervorragenden mechanischen Eigenschaften nach dem Einbrennen, wie grosse Härte und Kratzfestigkeit bei guter Elastizität und fester Haftung auf dem Substrat.

Nach dem Einbrennen bei Temperaturen bis zu 200°C während einer Einbrenndauer von etwa 15 Minuten besitzen die Überzüge einen ausserordentlich guten Korrosionsschutz. Im Salzsprühtest nach DIN 50021 werden Werte bis zu 1000 Stunden erreicht.

Es wurde ferner gefunden, dass die Oberfläche des eingebrannten Überzuges so glatt ist, dass eine einzige Decklackschicht ausreicht, um eine Lackierung mit gutem Aussehen zu erreichen.

Das Überzugsmittel zeichnet sich durch eine sehr gute Badstabilität und Haltbarkeit aus.

Die in dem erfindungsgemässen Verfahren verwendeten wässrigen Dispersionen ermöglichen die Beschichtung beliebiger elektrisch leitfähiger metallischer Werkstücke, vorzugsweise Werkstücke aus Eisenmetallen. Die in das Elektrotauchbad eingetauchten zu beschichtenden Werkstücke werden als Kathode geschaltet.

Das basische Gruppen enthaltende kationische Kunstharz liegt in der wässrigen Dispersion in protonisierter Form vor und dient als Trägerharz für die Komponente B. Es wird im folgenden Text als «Trägerharz» bezeichnet. Protonisiert wird das Trägerharz mit geeigneten anorganischen und/oder organischen Säuren, vorzugsweise wasserlöslichen Carbonsäuren und ist in protonisierter Form in Wasser löslich oder dispergierbar, bzw. mit Wasser mischbar und verdünnbar. Der pH-Wert der wässrigen Dispersion kann auf einen Wert zwischen 1 und 9 eingestellt werden.

Geeignete Säuren sind praktisch alle bekannten anorganischen und organischen Säuren, wie z.B. Salzsäure, Schwefelsäure, Phosphorsäure, Kohlensäure, p-Toluolsulfonsäure, Essigsäure, Propionsäure, Ameisensäure, Zitronensäure, Milchsäure, Apfelsäure, Fumarsäure, Maleinsäure, Phthalsäure, sowie die Halbester der Fumarsäure, Maleinsäure und Phthalsäure mit einwertigen oder mehrwertigen aliphatischen Alkoholen, wie Methanol, Äthanol, Propanol, Äthylenglykol. Die besten Ergebnisse werden erhalten mit Essigsäure, Milchsäure und Ameisensäure, die deshalb als bevorzugt geeignete Protonisierungsmittel vorgeschlagen werden.

Das Trägerharz findet seine bevorzugte Verwendung in Überzugsmitteln für die kathodische Elektrotauchlackierung elektrisch leitfähiger Substrate, z.B. von Metallteilen aus Aluminium, Messing, Kupfer, Eisen, Stahl und Eisenlegierungen mit anderen Metallen, die gegebenenfalls chemisch vorbehandelt, z.B. phosphatiert sind.

Die in dem erfindungsgemässen Verfahren verwendete wässrige Dispersion enthält als Komponente A basische Gruppen enthaltende kationische Kunstharze. Als bevorzugt geeignet sind Reaktionsprodukte eines epoxidgruppenhaltigen Harzes mit primären und/oder sekundären Aminen oder Reaktionsprodukte des epoxidgruppenhaltigen Harzes mit epoxidgruppenfreien Mannich-Basen. Zusammen mit der Komponente B bildet dieses Kunstharz eine wässrige Dispersion, die bei Raumtemperatur beständig ist.

Als epoxidgruppenhaltiges Harz kann eine beliebige monomere oder polymere Verbindung oder eine Mischung solcher Verbindungen verwendet werden, die im Mittel eine oder mehrere Epoxidgruppen pro Molekül enthält. Polyepoxidverbindungen mit 2 bis 3 Epoxidgruppen pro Molekül sind bevorzugt. Eine besonders gut geeignete Klasse von Polyepoxiden sind die Polyglycidyläther von Polyphenolen, wie von Bisphenol A. Man erhält diese z.B. durch Verätherung eines Polyphenols mit Epichlorhydrin oder Dichlorhydrin in Gegenwart von Alkali. Als phenolische Verbindung kommen bei solchen Polyepoxiden z.B. Bis(4-hydroxyphenyl)-2,2-propan, 4,4'-Dihydroxybenzophenol, Bis(4-hydroxyphenyl)-1,1-äthan, Bis(4-hydroxyphenyl)-1,1-isobutan, Bis(4-hydroxy-tert.-butylphenyl)-2,2-propan, Bis(2-hydroxynaphthyl)methan und 1,5-Dihydroxynaphthalin in Betracht. In manchen Fällen ist es vorteilhaft, Polyepoxide mit etwas höheren Molekulargewichten und aromatischen Gruppen zu verwenden. Man erhält sie, indem man den Diglycidyläther mit einem Polyphenol, wie Bis-phenol A, umsetzt und dieses Produkt dann weiter mit Epichlorhydrin zu einem Polyglycidyläther umsetzt. Der Polyglycidyläther von Polyphenolen enthält bevorzugt freie Hydroxylgruppen zusätzlich zu den Epoxidgruppen.

Die Polyglycidyläther der Polyphenole können als solche verwendet werden, doch ist es häufig vorteilhaft, einen Teil der reaktionsfähigen Stellen, (Hydroxylgruppen oder in manchen Fällen Epoxidgruppen) mit einem modifizierenden Material umzusetzen, um die Filmeigenschaften des Harzes zu modifizieren. Für eine derartige Umsetzung kommt die Veresterung mit Carbonsäuren, insbesondere Fettsäuren und/oder die Verätherung mit Mono- oder Polyalkoholen in Betracht, die gut bekannt sind. Besonders geeignete Carbonsäuren sind gesättigte Fettsäuren und insbesondere Pelargonsäure.

Geeignete Polyalkohole sind Äthylenglykol, Propylenglykol, Butandiol-1,2 oder 1,4-Hexandiol, Neopentylglykol, Dimethylolcyclohexan, Perhydrobisphenol A, ferner Polyester, wie z.B. vorzugsweise lineare Polyester mit endständigen OH-Gruppen. Ausserdem können die Epoxidharze mit isocyanatgruppenhaltigen organischen Materialien oder anderen reaktionsfähigen organischen Materialien modifiziert werden.

Eine andere Gruppe von geeigneten Polyepoxiden erhält man aus Novolaken oder ähnlichen Polyphenolharzen.

Auch die Polyglycidyläther von mehrwertigen Alkoholen sind geeignet. Als Beispiele derartiger mehrwertiger Alkohole seien Äthylenglykol, Diäthylenglykol, Triäthylenglykol, 1,2-Propylenglykol, 1,4-Propylenglykol, 1,5-Pentandiol, 1,2,6-Hexantriol, Glycerin, Bis(4-hydroxycyclohexyl)-2,2-propan genannt. Es können auch Polyglycidylester von Polycarbonsäuren verwendet werden, die man durch die Umsetzung von Epichlorhydrin oder ähnlichen Epoxidverbindungen mit einer aliphatischen oder aromatischen Polycarbonsäure, wie Oxalsäure, Bernsteinsäure, Glutarsäure, Terephthalsäure, 2,6-Naphthalindicarbonsäure und dimerisierte Linolensäure, erhält. Beispiele sind Glycidyladipat und Glycidylphthalat.

Geeignet sind ferner Copolymerisate von ungesättigten Verbindungen, die eine Epoxidgruppe enthalten, z.B. Glycidylmethacrylat, Glycidylacrylat, N-Glycidylacrylamid, Allylglycidyläther und N-Glycidylmethacrylamid, mit einem anderen ungesättigten Monomeren, das damit copolymerisierbar ist.

Die Umsetzung der epoxidgruppenhaltigen Materialien mit einem Amin erfolgt unter Bildung eines Reaktionsproduktes. Das verwendete Amin kann primär oder sekundär sein, wobei sekundäre Amine sich besonders gut eignen.

Beispiele solcher Amine sind Mono- und Dialkylamine, wie Methylamin, Äthylamin, Propylamin, Butylamin, Dibutylamin, Dimethylamin, Diäthylamin, Dipropylamin, Diisopropylamin, Methylbutylamin, Dibutylamin, Diäthanolamin, Diamylamin, Diisopropanolamin, Äthylaminoäthanol, Äthylaminoisopropanol, Äthanolamin, Äthylendiamin, Diäthylentriamin, Methylcyclohexylamin, Dicyclohexylamin.

In den meisten Fällen werden niedermolekulare Amine verwendet, doch ist es auch möglich, höhermolekulare Monoamine anzuwenden, insbesondere dann, wenn die Absicht besteht, die Flexibilität des Harzes durch den Einbau solcher Amine zu erhöhen. In ähnlicher Weise kann man auch Mischungen aus niedermolekularen und höhermolekularen Aminen zur Modifizierung der Harzeigenschaften verwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Die Umsetzung des Amins mit der epoxidgruppenhaltigen Verbindung tritt häufig schon beim Vermischen dieser Materialien ein. Es kann aber gegebenenfalls eine Erwärmung auf mässig erhöhte Temperaturen wünschenswert sein, z.B. auf 50 bis 150°C, doch sind Umsetzungen auch bei niedrigeren und höheren Temperaturen möglich. Häufig ist es vorteilhaft zur Beendigung der Umsetzung die Temperatur gegen das Ende der

Reaktion mindestens geringfügig für eine ausreichende Zeit zu erhöhen, um eine vollständige Umsetzung sicherzustellen.

Für die Umsetzung mit der epoxidgruppenhaltigen Verbindung sollte mindestens eine solche Menge an Amin verwendet werden, dass das Harz für die Verdünnung mit Wasser einen ausreichenden kationischen Charakter annimmt, wenn es durch Zugabe einer Säure protonisiert worden ist. Es können im wesentlichen alle Epoxidgruppen des Harzes mit einem Amin umgesetzt werden. Es ist aber auch möglich, überschüssige Epoxidgruppen in dem Harz zu belassen, die bei der Berührung mit Wasser unter Bildung von Hydroxylgruppen hydrolisieren.

Der gesamte Aufbau des aminogruppenhaltigen kationischen Kunstharzes erlaubt nach seiner Protonisierung mit Säuren als Trägerharz zu gewährleisten, dass feinteilige ionische Kunststoffe in ihm so verteilt werden können, dass auch bei einem pH-Wert von über 7 stabile wässrige Dispersionen entstehen, aus denen die kathodische Abscheidung der Überzüge bei diesen pH-Werten zwischen 7 und 9 vorgenommen werden kann.

Anstelle der Amine kann die Reaktion der epoxidgruppenhaltigen Harze auch mit epoxidgruppenfreien Mannich-Basen zur Bildung der kationischen Kunstharze erfolgen.

Diese Umsetzung ist bekannt und in den Patentanmeldungen DE-A 2 419 179, DE-A 2 320 301, DE-A 2 357 075, DE-A 2 541 801, DE-A 2 554 080 und DE-A 2 751 499 beschrieben.

Als epoxidfreie Mannich-Basen sind solche bevorzugt geeignet, die durch Reaktion der Komponenten

($a_1$) äthergruppenfreien kondensierten Phenolen mit mindestens zwei aromatischen Ringen und mindestens zwei phenolischen Hydroxylgruppen und/oder

($a_2$) äthergruppenhaltigen kondensierten Phenolen mit mindestens zwei aromatischen Ringen und mindestens einer phenolischen Hydroxylgruppe,

($a_3$) sekundären Aminen mit mindestens einer Hydroxyalkylgruppe, gegebenenfalls im Gemisch mit

($a_4$) sekundären Dialykl- oder Dialkoxyalkylaminen ohne freie Hydroxylgruppen,

($a_5$) Formaldehyd oder Formaldehyd abspaltende Verbindungen

erhalten werden.

Zu den einzelnen Komponenten ist folgendes zu sagen:

Als Komponente $a_1$ - äthergruppenfreie kondensierte Phenole mit mindestens zwei aromatischen Ringen und mindestens zwei phenolischen Hydroxylgruppen - kommen als besonders geeignet in Frage.

Kondensierte Phenole der allgemeinen Formel

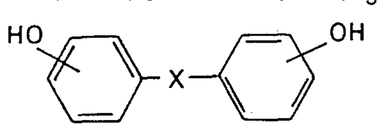

wobei die Hydroxylgruppen in ortho- oder para-Stellung zu X stehen und X ein geradkettiger oder verzweigter, zweiwertiger aliphatischer Rest mit 1 bis 3 Kohlenstoffatomen oder $SO_2$, SO oder

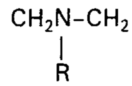

(mit R = Alkylrest mit 1 bis 6 C-Atomen) ist, vorzugsweise geeignet ist Bisphenol A. Auch niedrigmolekulare Umsetzungsprodukte aus Phenolen mit Formaldehyd, sogenannte Novolake können eingesetzt werden.

Gegebenenfalls können im Gemisch mit den kondensierten Phenolen $a_1$) oder auch anstelle dieser weitere kondensierte Phenole $a_2$) verwendet werden, die mindestens eine phenolische Hydroxylgruppe und darüber hinaus noch eine oder mehrere Äthergruppen im Molekül enthalten. Diese Produkte besitzen die allgemeine Formel

$$HO-B-[O-E-O]_n-H$$

bzw.

$$HO-B-[O-E-O]_n-P$$

wobei B für den Rest

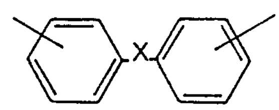

steht und X die oben angegebene Bedeutung hat, E für einen Hydroxylgruppen enthaltenden, durch Addition einer Epoxidverbindung an eine phenolische Hydroxylgruppe erhaltenen Rest, P für einen Phenyl- oder Alkylphenylrest, sowie n für eine ganze Zahl von 1 bis 3 steht, und wobei als Epoxidverbindungen (für E) bevorzugt Epoxidharze, wie z.B. Diglycidyläther von Bisphenol A, Pentaerythrit, Glycerin, Trimethylolpropan, Glykol, Glykoläther und anderer mehrwertiger, vorzugsweise zwei- bis vierwertiger Alkohole eingesetzt werden.

Sollen die kondensierten Phenole $a_2$) allein verwendet werden, so nimmt man zweckmässigerweise solche auf Basis von Tri- oder Tetraglycidyläthern.

Andere geeignete Verbindungen mit Epoxidgruppen sind stickstoffhaltige Diepoxide, wie sie in der US-A 3 365 471 beschrieben sind, Epoxidharze aus 1,1-Methylen-bis-(5-substituiertem Hydantoin) nach der US-A 3 391 097. Diepoxide aus Bisimiden nach US-A 3 450 711, epoxylierte Aminomethyl-di-phenyloxide nach US-A 3 312 664, heterocyclische N,N'-Diglycidylverbindungen nach US-A 3 503 979, Aminoepoxyphosphate nach GB-A 1 172 916 oder 1,3,5-Triglycidylisocyanurate.

Besonders bevorzugt als Komponente $a_2$) sind die Phenolgruppen enthaltenden, praktisch epoxidgruppenfreien Umsetzungsprodukte von Diglycidyläthern des Bisphenol A oder mehrwertiger aliphatischer Alkohole, wie Pentaerythrit, Trimethylolpropan und Glycerin, mit Bisphenol A und gegebenenfalls Phenol. Solche Produkte weisen im allgemeinen Molekulargewichte von 650 bis 1300 und Epoxidwerte von 0,004 bis 0,01 auf und können beispielsweise bei Temperaturen zwischen 160 und 180°C, bei Anwesenheit von Reaktionskatalysatoren bei entsprechend niedrigen Temperaturen, hergestellt werden.

Die kondensierten Phenole $a_2$) enthalten aliphatisch gebundene Hydroxylgruppen. Zum Teil entstehen diese aus den Epoxidgruppen der Epoxidharze (E) bei deren Umsetzung mit den Bisphenolen (B) bzw. mit den Phenolen (P). Hydroxylgruppen können aber auch schon in den Epoxidharzen selbst enthalten sein, wenn diese durch Umsetzung von mehr als zweiwertigen Alkoholen (z.B. Pentaerythrit, Trimethylolpropan oder Glycerin) mit 2 Mol Epichlorhydrin hergestellt wurden.

Für den an sich bevorzugten Fall, das Gemische der Komponenten ($a_1$) und ($a_2$) eingesetzt werden, liegt das Gewichtsverhältnis der beiden Komponenten zwischen 1:0,1 und 1:5.

Als sekundäre Amine ($a_3$), die mindestens eine Hydroxylalkylgruppe enthalten, eignen sich beispielsweise Alkyläthanolamine oder Alkylisopropanolamine mit 1 bis 6 Kohlenstoffatomen in der Alkylgruppe. Bevorzugt sind jedoch Dialkanolamine von Alkoholen mit 2 bis 6 Kohlenstoffatomen, insbesondere Diäthanolamin sowie Gemische dieser Dialkanolamine mit Alkylalkanolaminen.

Die sekundären Amine ($a_3$), die in den Mannich-Basen als Dialkanolaminomethylgruppen und Alkylalkanolaminomethylgruppen eingebaut sind, sind für den Grad der Dispergierbarkeit der Bindemittel in dem gewünschten pH-Bereich von 6,0 bis 10,2 und für die Vernetzung des Systems von wesentlicher Bedeutung.

Als sekundäre Dialkyl- oder Dialkoxyalkylamine ($a_4$), die zusammen mit den hydroxyalkylgruppenhaltigen Aminen ($a_3$) für die Herstellung der Mannich-Basen eingesetzt werden, eignen sich solche der allgemeinen Formel

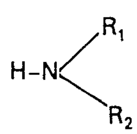

wobei $R_1$ und $R_2$ gleich oder verschieden sind und für einen geradkettigen oder verzweigten aliphatischen Rest mit 2 bis 10 Kohlenstoffatomen, der gegebenenfalls Alkoxygruppen enthält, stehen. Derartige geeignete sekundäre Amine sind beispielsweise Di-n-butylamin, Di-n-propylamin, Diisopropylamin, Di-n-pentylamin, Di-n-hexylamin, Di-n-octylamin, Di-2-äthylhexylamin und Di-2-alkoxyäthylamine, wie z.B. Di-2-methoxy-, Di-2-äthoxy- oder Di-2-butoxyäthylamin sowie solche, in denen $R_1$ und $R_2$ zu einem Ring verknüpft sind, wie z.B. Morpholin oder Piperidin.

Bevorzugt geeignet sind Di-n-butylamin, Di-2-äthylhexylamin und Di-n-hexylamin. Die Wirkungsweise dieser sekundären Amine ($a_4$) liegt vornehmlich in der Beeinflussung der Stabilitätseigenschaften der Bindemittel, ausserdem tragen sie zum Verlauf und zur «inneren Weichmachung» der aus den Bindemitteln hergestellten Lackschichten bei. Sie leisten auch einen gewissen Beitrag zur Vernetzung.

Die sekundären Amine können unter anderem, bedingt durch ihre Herstellungsweise, auch Anteile entsprechender primärer Amine enthalten, doch sollte deren Anteil 20 Gewichtsprozent des sekundären Amins nicht übersteigen. Das Gewichtsverhältnis der Komponente ($a_3$) und ($a_4$) kann zwischen 1:10 und 1:0,1, vorzugsweise zwischen 1:2 und 2:1 liegen.

Als Formaldehyd bzw. Formaldehyd liefernde Verbindungen ($a_5$) werden wässrige oder alkoholische, wie z.B. butanolische Formaldehydlösungen oder Paraformaldehyd oder deren Gemische verwendet.

Die Herstellung der Mannich-Basen erfolgt nach den üblichen, in der Literatur angegebenen Methoden (vgl. z.B. Houben-Weyl, Methoden der organischen Chemie, Band XI/1, Seite 731 (1957)), vorzugsweise durch Umsetzung bei Temperaturen zwischen 20 und 80°C. Die Verhältnisse der eingesetzten Ausgangsstoffe richten sich nach den jeweils angestrebten Eigenschaften, wobei das Molverhältnis der Komponenten ($a_1$)- und ($a_2$) zu den Komponenten ($a_3$) und ($a_4$) bevorzugt 1:0,75 bis 1:3 ist. Im allgemeinen wird aber auf jede phenolische Hydroxylgruppe etwa ein Mol sekundäres Amin eingesetzt. Die Menge an ($a_5$) beträgt mindestens ein Mol, bezogen auf ein Mol sekundäres Amin.

Die epoxidgruppenfreien Mannich-Basen werden in einer Menge von 50 bis 90, vorzugsweise 60 bis 80 Gewichtsprozent, mit 5 bis 50, vorzugsweise 10 bis 30 Gewichtsprozent Epoxidharz umgesetzt. Die Reaktion der beiden Komponenten erfolgt im allgemeinen bei Temperaturen von 20 bis 100°C, vorzugsweise 60 bis 80°C, gegebenenfalls in Gegenwart von organischen Lösungsmitteln wie z.B. Alkoholen, Glykoläthern und Ketonen. Das erhaltene Reaktionsprodukt ist im wesentlichen epoxidgruppenfrei.

Ein Teil der aliphatisch gebundenen Hydroxylgruppen der Komponente A kann gegebenenfalls in Urethangruppen umgewandelt werden. Für die Reaktion der Hydroxylgruppen mit den teilblokkierten Polyisocyanaten werden bevorzugt die epoxidgruppenhaltigen Harze umgesetzt. Werden Epoxidharze auf Basis mehrwertiger aliphatischer Alkohole, z.B. Pentaerythrit, verwendet, dann erfolgt der Angriff des Isocyanats bevorzugt an der freien primären Alkoholgruppe, erst in zweiter Linie reagiert die sekundäre Alkoholgruppe, die aus dem Epoxidring gebildet worden war.

Auch eventuell vorhandene Amino- oder Iminogruppen können mit den teilblockierten Polyisocyanaten reagieren, was in manchen Fällen erwünscht sein kann.

Die Reaktion wird üblicherweise bei Temperaturen von 50° bis 120°, vorzugsweise von 70° bis 100°C vorgenommen, wobei übliche Katalysatoren für die Polyurethan-Bildung, wie z.B. Dibutylzinndilaurat, anwesend sein können. Es wird in Abwesenheit von polaren Lösungsmitteln gearbeitet; vorzugsweise wird die Umsetzung in der Schmelze vorgenommen, es können jedoch auch inerte Verdünnungsmittel zugegen sein.

Als teilblockierte Polyisocyanate sind aromatische Diisocyanate, wie Toluylendiisocyanate oder Xylylendiisocyanate oder deren Dimere und Trimere besonders geeignet. Es können jedoch auch aliphatische Diisocyanate, wie Hexamethylendiisocyanat, verwendet werden; ausserdem Präpolymere, die durch Umsetzung von Polyolen oder Polyätherpolyolen mit einem Überschuss an Polyisocyanaten hergestellt werden. Als Blockierungsmittel kommen bevorzugt aliphatische Alkohole in Frage, die geradkettig, verzweigt oder ringförmig vorliegen können, wie z.B. Methanol, Äthanol, n-, iso- oder tert.-Butanol, Hexanol, Äthylhexanol, Furfurylalkohol, Cyclohexanol, Alkylglykole, Alkyldiglykole und Alkyltriglykole. Aber auch andere Blockierungsmittel, wie Oxime, Lactame, Ketone oder Malonester können verwendet werden.

Es ist ohne weiteres möglich, nur einen Teil der Mannich-Basen bzw. der Epoxidharze mit Polyisocyanaten zu modifizieren: Sei es, dass nebeneinander Epoxidverbindungen mit und ohne aliphatische Hydroxylgruppen vorliegen, sei es, dass nach erfolgter Umsetzung mit Polyisocyanat weitere, unmodifizierte Epoxidverbindungen zugegeben werden.

Die Mengenverhältnisse bei der Reaktion mit den teilblockierten Polyisocyanaten werden bevorzugt so gewählt, dass auf ein Mol basischen Stickstoff im fertigen Reaktionsprodukt 0,01 bis 1,0, vorzugsweise 0,05 bis 0,5 Mol Urethangruppen kommen, wobei sowohl die Urethanbindung zwischen Reaktionsprodukt und Polyisocyanat als auch diejenige zwischen Blockierungsmittel und Polyisocyanat gerechnet wird.

Der gesamte Aufbau des Reaktionsproduktes erlaubt nach seiner Protonisierung mit Säuren als Trägerharz zu gewährleisten, dass feinteilige ionische Kunststoffe in ihm so verteilt werden können, dass stabile wässrige Dispersionen entstehen, aus denen die kathodische Abscheidung der Überzüge vorgenommen werden kann. Das Trägerharz ist in seiner protonisierten Form mit Wasser verdünnbar. Nach Bedarf können zusätzliche Lösungsmittel in Mengen bis zu 5% bezogen auf das feste Trägerharz mit enthalten sein, wie beispielsweise Alkohole, wie Isopropanol, Propanol, Butanol, Glykole, Glykoläther, wie Äthylenglykol,Propylenglykol,Äthylenglykol-mono-äthyläther, Äthylenglykol-mono-propyläther, Äthylenglykol-mono-butyläther oder auch andere wie Tetrahydrofuran, aliphatische und/oder aromatische Kohlenwasserstoffe, Ester, Äther, Ätherester, um die Lösungseigenschaften und Dispergiereigenschaften des Trägerharzes günstig zu beeinflussen.

Ein wichtiges Merkmal der Erfindung ist es, dass die wässrige Dispersion als Komponente B feinteilige ionische Kunststoffe eindispergiert enthält.

Sie sind bei Raumtemperatur bis zu Temperaturen von 100°C fest und gut mahlbar. Sie sind nicht reaktiv in der Art, dass sie bereits bei Raumtemperatur mit sich selbst oder mit anderen verträglichen Harzen, wie dem kationischen Trägerharz, zu hochmolekularen Stoffen verfilmen. Bei den üblichen Einbrennbedingungen, die zwischen 140°C und 220°C, vorzugsweise oberhalb 160°C liegen, schmelzen sie jedoch und verbinden sich mit dem kationischen Trägerharz auf dem beschichteten Substrat zu einem verträglichen Film.

Für die Komponente B können vom chemischen Aufbau her dieselben Kunstharze verwendet werden wie für die Komponente A mit der Einschränkung, dass sie als ionische Kunststoffe der Komponente B bei Raumtemperatur in fester und feinteiliger Form vorliegen müssen. Dies ist in der Regel der Fall, wenn sie eine Glastemperatur von 30°-150°C, vorzugsweise von 40°-130°C, aufweisen.

Bevorzugt eignen sich für die Komponente B Kunststoffpulver aus der Gruppe der Epoxidharze, Polyesterharze, Acrylatharze, Polyurethanharze und Polyamidharze. Als ionische Gruppen enthalten sie Ammonium-, Sulfonium- oder Phosphoniumgruppierungen. Besonders vorteilhaft sind solche feinteiligen Kunststoffe, die Ammoniumstrukturen enthalten.

Sie werden hergestellt nach bekannten Methoden z.B. durch Reaktion von Epoxidharzen oder modifizierten Epoxidharzen mit primären oder sekundären Aminen und anschliessender Neutralisation der Aminogruppen mit Säuren. Als Epoxidharze, bzw. modifizierte Epoxidharze geeignet sind die eingangs für die Komponente A aufgeführten epoxidgruppenhaltigen Harze.

Für die Komponente B kommen auch solche feinteiligen Kunststoffe in Frage, die durch Umsetzung von epoxidgruppenhaltigen Harzen mit tertiären Ammoniumsalzen zu quartären Ammoniumverbindungen erhalten wurden. Sie sind ebenfalls bekannt und beispielsweise in der DE-A 25 31 960 beschrieben

Als Komponente B geeignet sind auch pulverförmige, feinteilige Acrylatharze mit basischen Stickstoffgruppen. Solche Acrylatharze entstehen z.B. durch die Verwendung von z.B. Dimethylaminoäthylacrylat, Diäthylaminoäthylacrylat, Dimethylaminopropylacrylat, Diäthylaminopropylacrylat oder den entsprechenden Methacrylaten als Comonomere bei der Polymerisation und anschliessende Neutralisation des erhaltenen Copolymerisats mit Säuren.

Auch ionische Polyurethanpulver, für deren Herstellung als Polyolkomponente z.B. Triäthanolamin oder Tripropanolamin mitverwendet wird, sind als Komponente B geeignet.

Sämtliche Pulver dieser Art sind in der wässrigen Dispersion als Komponente B einsatzfähig, vorausgesetzt, dass sie mit dem Trägerharz verträglich sind. Eine Unverträglichkeit lässt sich daran leicht erkennen, dass sich der Überzug beim Einbrennen in zwei Schichten trennt.

Das ionische Kunststoffpulver kann in dieser Form in der wässrigen Dispersion dispergiert sein. Es ist aber auch möglich, ein Kunststoffpulver zu verwenden, das Füllstoffe enthält. In diesem Fall sind die Pigmente und/oder Füllstoffe bei der Herstellung des ionischen Kunststoffpulvers bereits in dieses miteingearbeitet worden. Die wässrige Dispersion kann dann selbst frei von Pigmenten sein.

Die erfindungsgemässe wässrige Dispersion ist nicht allein darauf beschränkt, dass sie nur ein einziges ionisches Harz enthält. Es können auch Gemische von zwei und mehr verschiedenen Kunststoffpulvern enthalten sein. Hierbei kann das eine oder andere Kunststoffpulver Pigmente und/oder Füllstoffe enthalten, das andere aber frei von diesen Zusatzstoffen sein. Die zum Einsatz gelangenden Kunststoffpulver können ausser den Pigmenten und Füllstoffen noch geringe Mengen von Härtungsmitteln und andere Zusatzstoffe, die das Fliessverhalten des Pulvers während des Einbrennens regulieren, enthalten. Diese in das Kunststoffpulver eingearbeiteten Zusätze können in ihrer Wirkung nicht durch die wässrige Dispersion negativ beeinflusst werden.

Wie in anderen Überzugsmitteln üblich, kann die wässrige Dispersion ebenfalls elektrophoretisch abscheidbare Hilfsstoffe enthalten, wie beispielsweise Pigmente, Füllstoffe, Härtungskatalysatoren, Mittel zur Verbesserung des Verlaufs, Antischaummittel und Haftverbesserungsmittel. Auch ein zusätzlicher Gehalt der wässrigen Dispersion an Vernetzungsmitteln, mit denen die Komponenten A und B bei Einbrenntemperaturen unter Vernetzung reagieren, ist für das erfindungsgemässe Verfahren in vielen Fällen vorteilhaft. Als Vernetzungsmittel kommen beispielsweise Aminoplastharze, wie z.B. Melaminformaldehydharze oder Harnstofformaldehydharze, Phenoplastharze oder voll blockierte Polyisocyanate in Frage.

Für die Verwendung der wässrigen Dispersion zum Herstellen von Einbrennüberzügen auf der Oberfläche von als Kathode geschalteten elektrisch leitfähigen Substraten durch kathodische Abscheidung aus einem Tauchbad in einem kathodischen Elektrotauchlackierverfahren ist das Verhältnis zwischen den Komponenten A und B, sowie die durchschnittliche Teilchengrösse der Komponente B für die Qualität des abgeschiedenen Überzuges von Bedeutung.

Bei der kathodischen Abscheidung werden die besten Ergebnisse erhalten, wenn auf 1 Gewichtsteil der Komponente A 0,1 bis 100 Gewichtsteile der Komponente B, bevorzugt 0,5 bis 10 Gewichtsteile Komponente B, bezogen auf das pigment- und füllstofffreie Pulver kommen.

Zusätzlich sind in der wässrigen Dispersion neben der Komponente A und der Komponente B noch 0 bis 10 Gewichtsteile Pigmente und/oder Füllstoffe, bevorzugt 2 bis 5 Gewichtsteile, enthalten.

Eine wichtige Rolle spielt die Teilchengrösse der Komponente B. Sie soll eine Korngrössenverteilung besitzen, bei der mindestens 95% der Teilchen kleiner als 30 $\mu$m sind. Die besten Ergebnisse werden erhalten und darum bevorzugt, sind solche Kunststoffpulver, bei denen mindestens 95% der Teilchen kleiner als 10 $\mu$m sind. Mit abnehmender Teilchengrösse werden die Kunststoffpulver besser von dem Trägerharz umhüllt. Aus diesem Grunde ist die kathodische Abscheidung von feineren Korngrössen gleichmässiger und einfacher.

Die Herstellung der wässrigen Dispersion erfolgt nach den in der Lackindustrie bekannten Methoden. So kann das Kunststoffpulver mittels einer hochtourigen Dispergiermaschine direkt in die wässrige Lösung oder Dispersion des protonisierten Trägerharzes eingerührt werden. Eine andere Möglichkeit besteht darin, das Kunststoffpulver zusammen mit den gewünschten Pigmenten und/oder Füllstoffen in einer Kugelmühle oder einer Rührwerksmühle gemeinsam in die wässrige Lösung des protonisierten Trägerharzes einzuarbeiten.

Eine weitere Möglichkeit der Herstellung der wässrigen Dispersion besteht darin, eine wässrige Aufschlämmung eines Kunststoffpulvers direkt in die wässrige Lösung des Trägerharzes einzumischen. Bei dieser Methode entfält das aufwendige Vermahlen mittels Sandmühle und Rührwerksmühle.

Um die Herstellung der wässrigen Dispersion zu erleichtern, kann die Einarbeitung der festen Komponente in Gegenwart geringer Mengen von Emulgatoren erfolgen. Geeignet sind beispielsweise solche nichtionischer Art vom Typ der Äthylenoxidaddukte verschiedener Kettenlänge, wie z.B. mit Äthylenoxid modifizierte Alkylphenole, z.B. das tertiäre Octylphenol, das mit 5 bis 40 Äthylenoxideinheiten modifiziert ist. Ausserdem mit Äthylenoxid modifizierte höhere aliphatische Alkohole wie z.B. Laurylalkohole mit 15 bis 50 Äthylenoxideinheiten, sowie ähnlich modifizierte langkettige Mercaptane, Fettsäuren oder Amine. Bevorzugt werden Gemische aus mindestens zwei Äthylenoxidaddukten, deren Äthylenoxideinheiten verschiedene Werte aufweisen. Die Badstabilität und die Eigenschaften des Überzuges werden durch die Zusatzstoffe nicht wesentlich beeinflusst. Geeignet sind ausserdem kationische Emulgatoren, wie z.B. niedermolekulare OH-gruppenhaltige Aminoverbindungen, die mit organischen oder anorganischen Säuren protonisiert sind. Die Mengen an Emulgatoren sollen 2 Gewichtsteile, bezogen auf die Menge des Trägerharzes, nicht übersteigen.

Die wässrige Dispersion ist bevorzugt geeignet für die kataphoretische Abscheidung eines Überzuges auf einem elektrisch leitfähigen Substrat, das als Kathode in einem Elektrotauchlackierverfahren geschaltet ist. Für die Durchführung der kathodischen Abscheidung wird die wässrige Dispersion bis zu einem Festkörpergehalt zwischen 5 und 30%, vorzugsweise zwischen 5 und 15% mit Wasser herab verdünnt. Der pH-Wert liegt zwischen 1 und 9, bevorzugt aber zwischen 5 und 9. Während der kathodischen Abscheidung wird die Dispersion bei Temperaturen zwischen

15 und 40°C gehalten. Das zu beschichtende Substrat wird in die Dispersion eingetaucht und als Kathode geschaltet. Als Anode wird Graphit oder Edelmetall verwendet. Zwischen Kathode und Anode lässt man einen Gleichstrom durch das Bad fliessen. Die Abscheidespannung beträgt 20 bis 500 Volt. Es scheidet sich hierbei auf der Kathode ein Überzug ab. Die Abscheidung wird durchgeführt, bis die gewünschte Schichtdicke erreicht ist.

Ein besonderer Vorteil ist es, dass bereits nach kurzer Zeit Schichtdicken auf dem überzogenen Substrat bis zu 150 µm erhalten werden. Je nach Wahl des Kunststoffpulvers genügen mitunter bereits 10 Sekunden, um diese Schichtdicken zu erhalten. Der Überzug wird nach dem Entfernen des Substrates aus dem Tauchbad mit Wasser abgespült und bei Temperaturen zwischen 140°C und 220°C innerhalb von 15 bis 60 Minuten eingebrannt.

Mitunter ist es zweckmässig, eine kurze Vortrocknung bei 100°C vor dem Einbrennen vorzuschalten.

Es war überraschend, dass das Pulverharz sich zusammen mit dem Trägerharz auf der Kathode abscheidet. Das war nicht zu erwarten, weil Dispersionen aus feinteiligem Pulverharz sich nicht elektrophoretisch abscheiden lassen.

Da das Elektrotauchbad während des Abscheidevorgangs sowohl an Trägerharz als auch an Kunststoffpulver verarmt, ist es notwendig, das Bad um diese Stoffe zu ergänzen, damit die ursprüngliche Zusammensetzung der wässrigen Dispersion stets wieder vorhanden ist.

Die Eigenschaften des eingebrannten Überzuges sind technologisch hervorragend. Die Korrosionsfestigkeit ist überraschend gut und variiert mit der Natur der festen Pulverlacke. Es wird unter Verwendung der erfindungsgemässen wässrigen Dispersion eine sehr hohe Schichtstärke erreicht, was allerdings den Umgriff etwas beeinträchtigt. Die eingebrannte Schicht kann ohne weiteres mit üblichen Lacken weiter lackiert werden.

Die nachfolgenden Beispiele sollen das Wesen der Erfindung erläutern, aber nicht einschränken. Prozentangaben beziehen sich auf Gewichtsprozent; Teile auf Gewichtsteile.

Beispiel 1 (Herstellung einer Komponente A)

In einen Reaktionskolben, der mit Rührer, Thermometer, Stickstoffeinlass und Rückflusskühler versehen ist, werden 960 g eines Epoxidharzes auf Biphenol A-Basis mit einem Epoxidäquivalentgewicht (480) und 167 g Xylol eingewogen. Diese Mischung wird auf 100°C aufgeheizt und unter Stickstoffatmosphäre werden dann 570 g einer 70 %-igen Lösung eines Diketimins aus Diäthylentriamin und Methylisobutylketon in Methylisobutylketon und 36,5 g Diäthylamin hinzugegeben. Die Mischung wird 1 Stunde bei 110° bis 120°C gerührt und dann abgekühlt. Es entsteht ein aminogruppenhaltiges kationisches Kunstharz mit einem Festkörpergehalt von 80 %. Viskosität, gemessen als 50%ige Lösung in Xylol, beträgt 355 mPa.s.

Beispiel 2 (Herstellung einer Komponente A)

In einen mit Rührer, Thermometer, Stickstoffeinlass und Rückflusskühler versehenen Reaktionskolben werden 960 g eines Epoxidharzes auf Bisphenol A-Basis (Epoxidäquivalentgewicht 480) und 220 g Xylol eingewogen. Diese Mischung wird auf 100°C aufgeheizt und unter Stickstoffatmosphäre werden 146 g Diäthylamin hinzugegeben. Die Mischung wird 1 Stunde bei 110°C bis 120°C gerührt und dann abgekühlt. Es wird eine Harzlösung mit 80 % Festkörpergehalt erhalten. Die Viskosität, gemessen als 50%ige Lösung in Butylglykol, beträgt 35 mPa.s.

Beispiel 3 (Herstellung einer Komponente B)

1000 g eines Epoxidharzes auf Basis Bisphenol A vom Epoxidäquivalentgewicht 850 (Epikote 1055) werden in einem Reaktionsgefäss, versehen mit Rührer, Thermometer, Stickstoffeinlass, Rückflusskühler und Zulauftrichter, bei 130°C aufgeschmolzen. Durch den Zulauftrichter werden 105 g Diethanolamin bei 120-130°C zugegeben und eine Stunde reagieren lassen. Danach werden 60 g Eisessig zugegeben, 30 Minuten bei 120-130°C nachreagiert und ausgegossen. Es wurde ein Festprodukt erhalten.

| | |
|---|---|
| Schmelzpunkt: | 74°C |
| MEQ-Säure: | 0,359 MEQ/g |
| MEQ-Base: | 0,489 MEQ/g |
| Viskosität: | 910 mPa.s. (50%ige Lösung in Ethylglykol) |

Das Festprodukt wird vorgemahlen. Anschliessend wird durch eine Feinmahlung und Siebung ein Pulver von einer Korngrösse von 20 µm hergestellt.

Beispiel 4 (Herstellung einer Komponente B)

Unter den Reaktionsbedingungen von Beispiel 3 werden 850 g des Epoxidharzes gemäss Beispiel 3 mit 149 g eines Umsetzungsproduktes von 89 g Dimethylethanolamin und 60 g Essigsäure umgesetzt. Es wird ein Festprodukt erhalten.

| | |
|---|---|
| Schmelzpunkt: | 103°C |
| MEQ-Säure: | 0,25 MEQ/g |
| MEQ-Base: | 0,403 MEQ/g |
| Viskosität: | 970 mPa.s |

Die Pulverherstellung erfolgt wie in Beispiel 3 beschrieben.

Beispiel 5 (Herstellung einer Komponente B)

100 g eines Pulvers der Harzzusammensetzung gemäss Beispiel 4 (Teilchengrösse 500 my) werden mit 3 g eines Verlaufsmittels, 20 g Titandioxid (Rutil-Typ), 8 g Aluminiumsilikat und 2 g Eisenoxidrot in einem Kneter in der für die Herstellung pulverförmiger Anstrichmittel üblichen Weise geschmolzen und zusammengeknetet. Das erstarrte Gemisch wird vorgemahlen, und dann in

einer Spiralstrahlmühle zu einem Pulver vermahlen, das einen maximalen Teilchendurchmesser von 30 μm und einen mittleren Teilchendurchmesser von 10–15 μm hat.

Beispiel 6 (Herstellung einer Komponente B)

In einem Reaktionskolben gemäss Beispiel 3 werden 1500 g Ethylacetat eingewogen und unter Stickstoff auf Rückfluss erhitzt. Dazu wird innerhalb von 3 Stunden eine Mischung von 300 g Styrol, 450 g Methylmethacrylat, 450 g Butylacrylat, 300 g Glycidylmethacrylat und 30 g Azoisobuttersäuredinitril gegeben. Nach Ende des Zulaufs wird noch 2 Stunden unter Rückfluss nachpolymerisiert. Anschliessend werden 188 g Methylethanolamin durch einen Tropftrichter hinzugegeben und 1 Stunde unter Rückfluss reagieren lassen. Danach werden 126,7 g Essigsäure hinzugegeben. Nach weiteren 30 Minuten Reaktionszeit bei 70°C wird das Ethylacetat im Vakuum abdestilliert. Das erhaltene Festprodukt (Schmelzpunkt 84°C) wird wie in Beispiel 3 zu einem Feinpulver verarbeitet.

Beispiel 7

Zu 100 Teilen des nach Beispiel 1 hergestellten Trägerharzes werden 5,5 Teile Eisessig gegeben. Diese Mischung wird unter Rühren in 520 Teile destilliertes Wasser eindispergiert. In diese Dispersion werden 50 Teile des nach Beispiel 3 erhaltenen Pulvers eingerührt. Die so hergestellte Dispersion hat einen Festkörper von 20 % und einen pH-Wert von 8,3. In diese Dispersion wird ein phosphatiertes Stahlblech eingetaucht und als Kathode geschaltet. Ein eingetauchtes Edelstahlblech wird als Anode geschaltet. Bei Anlegen eines Gleichstromes mit einer Spannung von 200 V und einer Badtemperatur von 20°C wurde auf dem Kathodenblech innerhalb von 30 Sekunden ein Überzug abgeschieden. Nach dem Herausnehmen des mit dem Überzug versehenen Bleches und Abspülen mit vollentsalztem Wasser wird 20 Minuten bei 180°C eingebrannt. Es entsteht ein harter, gleichmässiger, geschlossener Film mit einer durchschnittlichen Schichtstärke von 36 μm auf der der Anode zugewandten Blechseite.

Beispiel 8

In 100 Teile des nach Beispiel 1 hergestellten Trägerharzes werden 35,7 Teile einer 70%igen Lösung eines Umsetzungsproduktes von 174 g Toluylendiisocyanat, 130 g 3-Ethylhexanol und 44,7 g Trimethylolpropan, 0,5 Teile Dibutylzinndilaurat und 5,5 Teile Eisessig gegeben. Diese Mischung wird unter Rühren in 706 Teile destilliertes Wasser eindispergiert. In diese Dispersion werden 50 Teile des nach Beispiel 3 erhaltenen Pulvers eingerührt. Die erhaltene Dispersion hat einen Festkorper von 18 %. Sie wird nach einer Alterung von 24 Stunden gemäss Beispiel 7 abgeschieden. Es wird ein harter, gleichmässiger, geschlossener Film von 34 μm erhalten.

Der Film ist beständig gegen Methylisobutylketon und war bei der Korrosionsschutzprüfung nach DIN 50021 nach 1000 Stunden noch in Ordnung.

Beispiel 9

Es wird ein Überzugsmittel gemäss Beispiel 8 hergestellt. Das zu beschichtende phosphatierte Stahlblech wird um 90° geknickt, so dass ein L-förmiges Werkstück mit senkrechten und waagerechten Flächen entsteht.

Nach Abscheiden und Einbrennen gemäss Beispiel 8 wird die Schichtdicke gemessen. Sie beträgt auf dem waagerechten Teil 33 μm und auf dem senkrechten Teil 32 μm. Das Bild der Beschichtung war gleichförmig und glatt.

Der Versuch wird nach einer Alterung des Bades von 14 Tagen wiederholt. Es wurden Schichten von 31 μm auf der waagerechten und 30 μm auf der senkrechten Fläche gefunden.

Das Ergebnis zeigt, dass die beschriebenen Zusammensetzungen sehr gute Stabilität aufweisen.

**Patentansprüche**

1. Verfahren zum Beschichten eines als Kathode geschalteten elektrisch leitfähigen Substrates mit einem kationischen Überzugsmittel aus einem Elektrotauchbad und anschliessendes Härten des Überzuges, dadurch gekennzeichnet, dass man als kationisches Überzugsmittel eine wässrige Dispersion aus

A. mit Säuren protonisierten, basische Gruppen enthaltenden kationischen Kunstharzen in gelöster oder dispergierter Form und

B. eindispergierten feinteiligen ionischen Kunststoffen mit einer Glastemperatur von 30°C bis 150°C verwendet.

2. Verfahren nach Anspruch 1, dadurch gekennzeichnet, dass die Komponente A als basische Gruppen Aminogruppen enthält.

3. Verfahren nach den Ansprüchen 1 bis 2, dadurch gekennzeichnet, dass die Komponente B Ammonium-, Sulfonium- oder Phosphoniumgruppen enthält.

4. Verfahren nach Anspruch 1, dadurch gekennzeichnet, dass die Komponente A Ammoniumgruppen enthält.

5. Verfahren nach den Ansprüchen 1 bis 4, dadurch gekennzeichnet, dass die wässrige Dispersion Pigmente und/oder Füllstoffe eindispergiert enthält.

6. Verfahren nach den Ansprüchen 1 bis 5, dadurch gekennzeichnet, dass die Komponente B Pigmente und/oder Füllstoffe enthält.

7. Verfahren nach den Ansprüchen 1 bis 6, dadurch gekennzeichnet, dass die wässrige Dispersion organische Lösungsmittel in Mengen bis zu 5% bezogen auf die Komponente A enthält.

8. Verfahren nach den Ansprüchen 1 bis 7, dadurch gekennzeichnet, dass die wässrige Dispersion zusätzliche Vernetzungsmittel in Form von Melaminharzen, blockierten Polyisocyanaten oder Phenolharzen enthält.

9. Wässrige Dispersion zur Durchführung des Verfahrens nach den Ansprüchen 1 bis 8, dadurch gekennzeichnet, dass sie

A. mit Säuren protonisierte, basische Gruppen enthaltende kationische Kunstharze in gelöster oder dispergierter Form und

B. eindispergierte feinteilige ionische Kunststoffe mit einer Glastemperatur von 30°C bis 150°C enthält.

## Revendications

1. Procédé pour le revêtement d'un substrat électroconducteur, monté en cathode, à l'aide d'un produit de revêtement cationique à partir d'un bain d'électrophorèse, suivi du durcissement du revêtement, caractérisé en ce que l'on utilise en tant que produit de revêtement cationique une dispersion aqueuse

A) de résines synthétiques cationiques contenant des groupes basiques et protonées par des acides, sous forme dissoute ou dispersée, et

B) de matières plastiques ioniques, finement divisées, dispersées, ayant une température de transition vitreuse de 30 à 150°C.

2. Procédé selon la revendication 1, caractérisé en ce que le composant A contient en tant que groupes basiques des groupes amino.

3. Procédé selon l'une quelconque des revendications 1 ou 2, caractérisé en ce que le composant B contient des groupes ammonium, sulfonium ou phosphonium.

4. Procédé selon la revendication 1, caractérisé en ce que le composant A contient des groupes ammonium.

5. Procédé selon l'une quelconque des revendications 1 à 4, caractérisé en ce que la dispersion aqueuse ocntient, en dispersion, des pigments et/ou des charges.

6. Procédé selon l'une quelconque des revendications 1 à 5, caractérisé en ce que le composant B contient des pigments et/ou des charges.

7. Procédé selon l'une quelconque des revendications 1 à 6, caractérisé en ce que la dispersion aqueuse contient des solvants organiques en des quantités allant jusqu'à 5 % par rapport au composant A.

8. Procédé selon l'une quelconque des revendications 1 à 7, caractérisé en ce que la dispersion aqueuse contient des agents de réticulation supplémentaires sous la forme de résines de mélamine, de polyisocyanates séquencés ou de résines phénoliques.

9. Dispersion aqueuse pour la mise en œuvre du procédé selon l'une quelconque des revendications 1 à 8, caractérisée en ce qu'elle contient

A) des résines synthétiques cationiques contenant des groupes basiques et protonées par des acides, sous forme dissoute ou dispersée, et

B) des matières plastiques ioniques finement divisées et dispersées, ayant une température de transition vitreuse de 30 à 150°C.

## Claims

1. A process for coating an electrically conductive substrate, connected as the cathode, with a cationic coating agent from an electrocoating bath and subsequently hardening the coating, characterised in that an aqueous dispersion made from

A. cationic, synthetic resins which have been protonated with acids, contain basic groups and are in a dissolved or dispersed form and

B. dispersed, finely divided, ionic plastics having a glass temperature of 30°C to 150°C is used as the cationic coating agent.

2. A process according to Claim 1, characterised in that component A contains amino groups as basic groups.

3. A process according to Claim 1 or 2, characterised in that component B contains ammonium, sulfonium or phosphonium groups.

4. A process according to Claim 1, characterised in that component A contains ammonium groups.

5. A process according to Claims 1 to 4, characterised in that the aqueous dispersion contains dispersed in it pigments and/or fillers.

6. A process according to Claims 1 to 5, characterised in that component B contains pigments and/or fillers.

7. A process according to Claims 1 to 6, characterised in that the aqueous dispersion contains organic solvents in amounts up to 5%, relative to component A.

8. A process according to Claims 1 to 7, characterised in that the aqueous dispersion contains additional crosslinking agents in the form of melamine resins, blocked polyisocyanates or phenolic resins.

9. An aqueous dispersion for carrying out a process according to Claims 1 to 8, characterised in that it contains

A. cationic resins which are protonated with acids, contain basic groups and are in a dissolved or dispersed form and

B. dispersed, finely divided, ionic plastics having a glass temperature of 20°C to 150°C.